# EUROPEAN PATENT SPECIFICATION

(11) **EP 3 970 941 B1**
(45) Date of publication and mention of the grant of the patent: **07.05.2025**
(21) Application number: 21197296.3
(22) Date of filing: 16.09.2021
(51) Int. Cl.: B29C 44/34, A61F 2/91

(54) **AXISYMMETRIC CHIRAL AUXETIC STRUCTURE**
AXISYMMETRISCHE, AUXETISCHE CHIRALE STRUKTUR
STRUCTURE AUXÉTIQUE CHIRALE AXISYMÉTRIQUE

(30) Priority: 18.09.2020 SI 202000160
(43) Date of publication of application: 23.03.2022
(73) Proprietor: Univerza v Mariboru, 2000 Maribor (SI)
(72) Inventor: Vesenjak, Matej, 2000 Maribor (SI); Novak, Nejc, 2322 Majsperk (SI); Ren, Zoran, 2312 Hotinja vas (SI)
(74) Representative: Patentni Biro AF d.o.o.

(56) References cited:
- CN-A- 107 898 539
- CN-A- 109 116 578
- US-A1- 2012 060 991

## Description

### Field of the invention

The invention belongs to the field of materials design. The invention relates to an axisymmetric chiral auxetic structure.

### Background of the invention and the technical problem

Auxetic structures exhibit extensive volume changes during deformation due to a negative Poisson's ratio, as disclosed in US4,668,557. The structures shrink in the transverse direction at longitudinal compressive loading (the volume is significantly reduced), while the structures expand in the transverse direction at longitudinal tensile loading (the volume is thereby significantly increased). This is a consequence of the carefully designed deformation mechanism of the structure unit cells, which depends on cell porosity. The auxetic deformation concept leads to increased shear stiffness and altered response to bending loads resulting in improved energy absorption. Such properties are desirable in different fields of engineering, medicine, and sports.

Several types of two- and three-dimensional auxetic structures have been developed so far. Their geometry is based on unit cells, which periodically repeat in space and form a cellular structure. The cell morphology defines its size, shape and closed or open shape. The unit cell in the present invention has a chiral shape derived from on analysis of inherent frequencies of non-auxetic cellular structures, where curved struts or surfaces connect at nodes (corners) of the unit cell.

Cylindrical or spherical shapes of auxetic structures usually lead to imperfect or disclosed outer cells with sharp edges and loose struts that represent a hazard for possible injuries. Imperfect outer cells also reduce fundamental structural properties like stiffness and heat conduction and influence the structural deformation behaviour. The purpose and aim of the invention are to improve known cellular structures having the above-mentioned disadvantages, which will also achieve an auxetic response in all primal directions, i.e., axial, radial and circumferential direction for axisymmetric structures, and radial and both circumferential orthogonal directions for the spherical structures.

### State of the art

Possible solutions are cylindrical and spherical products with the curved outer surface with an auxetic geometry in the circumferential direction and hollow interior, as disclosed in patent application WO2018229585. Cylindrical shapes are often used in medicine, such as vascular stents, as disclosed in patent applications US20190358029, WO2019135907, and GB2514074.

A second solution represents shapes and rotated shapes with two-dimensional auxetic geometry and a constant cross-section in one direction (consequently showing auxetic response only in two directions out of three), thereby forming closed channels in the radial direction, limiting their permeability. At the same time, continuous surfaces increase the weight of the product. They are mainly designed as re-entrant hexagonal structures, as shown in US20120060991.

Patent application CN109116578A relates to a micro-structure corneal contact lens and a preparation method thereof. The corneal contact lens adopts a mechanical flexible material and comprises a porous grid structure of a hollow annular layout formed by one or more deformable elastic mechanical units according to one or more distribution rules, wherein the annular layout is formed by periodically annularly and radially combining and distributing or orthogonally combining and distributing the deformable elastic mechanical units. The units have a 2D geometry and are distributed in a different manner as the present invention.

Patent application CN107898539A discloses a unit cell structure and a polygonal negative poisson's ratio chiral-vessel stent composed of the same. The unit cell is based on geometries of circles, triangles and squares, which differs from the present invention.

These known shapes exhibit the above-mentioned problem of imperfect outer cells with sharp edges and loose struts.

### Description of the solution to the technical problem

The axisymmetric chiral cellular structure with a cylindrical or spherical shape according to the invention comprises equal (uniform) or variable unit chiral cells. The unit cell of the structure is tetra-chiral. The three-dimensional chiral unit cell represents a lattice structure composed only of curved struts forming an open-cellular structure, significantly decreasing the structure weight. The cell's shape is preferably such that the nodes define a cuboid or a cube, where the struts (sides) are not flat but curved (concave or convex) in any function or radius of curvature. The connectivity of the nodes can vary, which affects the global response of the structure. The axial symmetry of the auxetic structure is achieved with a periodic distribution of chiral unit cells, i.e. repetition of a pair consisting of one wider and one thinner cell in the radial and circumferential direction in one layer. The unit cells are connected at nodes. The way the struts connect nodes in a unit cell does not affect the periodic distribution of the unit cells' pairs. The number of layers defines the final height of the structure. The cells have a complete shape even on the outer edge of the structure due to the axial symmetry of unit cell distribution, thus equally contributing to the properties of the structure, such as stiffness and heat conductivity.

The axisymmetric chiral auxetic structure is assembled from the plurality of above-described chiral unit cells, which are uniformly or non-uniformly axisymmetrically distributed in space to form a cylindrical or a spherical shape. Uniformly means that the cells are periodically distributed as described above, while non-uniformly means that the cells are not periodically distributed, especially in case the unit cells are not shaped as a cube.

Upon mechanical loading, the structure exhibits auxetic deformation behaviour with negative Poisson's ratio in all polar or spherical directions. The deformation of the cylindrical chiral auxetic structure is isotropic in the radial direction under axial loading.

Several possible embodiments of the axisymmetric chiral auxetic structure are possible, with regards to the i) base material, which is metal or non-metal, ii) struts of unit cells, which can differ in cross-section shape, i.e. circular, triangular, quadrilateral; thickness; length; curvature, e.g. polynomial, trigonometric; the connection of adjoining or opposite nodes, iii) unit cells, which can differ in size and closure of the cell windows (i.e. closed or open cells), iv) distribution of unit cells in space.

The above-listed parameters may be uniform throughout the cellular structure or vary in the axial, radial or circumferential direction. The latter leads to graded axisymmetric chiral auxetic structures with spatially variable properties.

The axisymmetric chiral auxetic structures may be used as i) support in a pipe or a tube, for maintaining the inner cross-section or flow at folds (synclastic response at bending), ii) a filler for profiles with circular inner cross-sections, iii) a wrap (outer layer) of profiles with circular outer cross-section, iv) filter with variable characteristics, v) as a bumper or energy absorber, vi) an air-free or non-inflatable product (i.e. a tire, a ball), vii) a heat conductor, viii) an insulator.

The axisymmetric chiral auxetic cell structure according to the invention is shown in the following figures:
- Figure 1:: A primary three-dimensional chiral unit cell (a) and different connections between nodes
- Figure 2:: Outline of the cylindrical axisymmetric chiral structure (front view) and schematic of auxetic deformation in case of uniaxial compression loading
- Figure 3:: Cross-section of the cylindrical axisymmetric chiral structure with a) a constant cell size in the radial (r) direction and b) a variable cell size in the radial (r) direction
- Figure 4:: Cross-section of graded cylindrical axisymmetric chiral structure with variable cell size in the radial (r) direction
- Figure 5:: Cross-section of graded cylindrical axisymmetric chiral structure with a variable cross-section of struts in the radial (r) direction
- Figure 6:: Tube support with axisymmetric chiral structure
- Figure 7:: Axisymmetric structure as a filling or a wrap of a tube with circular cross-section

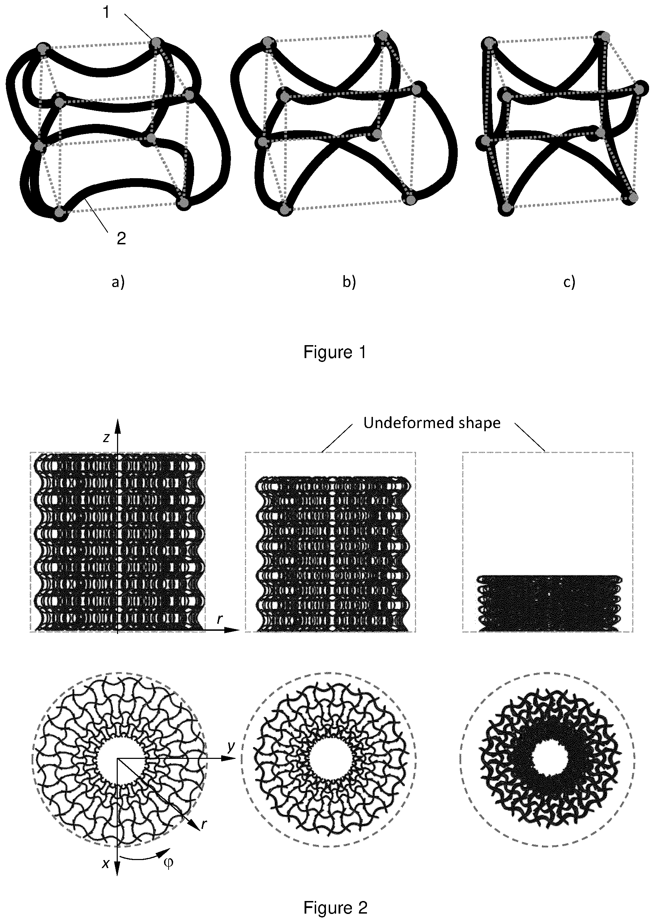

A primary three-dimensional chiral unit cell shown in figure 1a comprises curved struts 2, which connect the nodes 1. The cell's shape is such that the nodes define a cuboid or a cube, where the struts (sides) are not flat but curved (concave or convex) in any function or radius of curvature. Nodes 1 can be connected in different ways: along the edges as shown in figure 1a, diagonally across the cell surfaces as shown in figures 1b and 1c or a combination of both as shown in figure 1c. The cross-section of struts is arbitrary, wherein a hollow structure is also possible to reduce the structure weight (mass). An embodiment in which outer surfaces of unit cells can be solid (thin shells), thus forming a closed unit cell, is also possible. This provides for higher stiffness and energy absorption capacity of the entire structure.

The cylindrical axisymmetric auxetic structure shown in figure 2 comprises unit cells shown in figure 1, connected at nodes. The axial symmetry of the auxetic structure is achieved with a periodic distribution of chiral unit cells, i.e. repetition of a pair consisting of one wider and one thinner cell in the radial and circumferential direction in one layer. The way the struts connect nodes in a unit cell does not affect the periodic distribution of the unit cells' pairs. The number of layers defines the final height of the structure. Such structure shows isotropic deformation behaviour in the radial (r) direction upon uniaxial load, as shown for the case of compression load in figure 2. A cross-section of structure reduces in the radial direction during the compression load, resulting from the structure's auxetic nature.

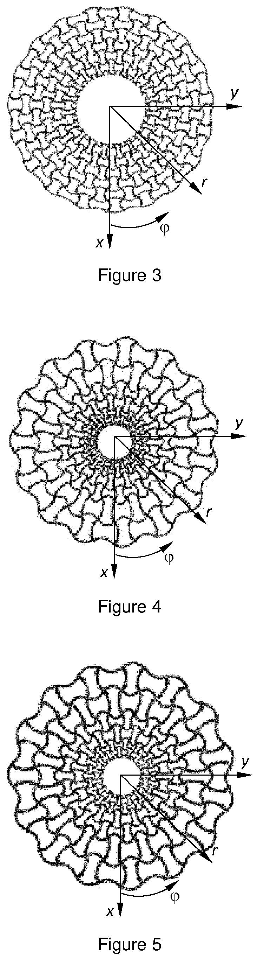

The cylindrical axisymmetric chiral structure can be assembled from unit cells of the same or different sizes as shown in figures 3 and 4, respectively, where differently sized cells are arranged in the radial (r) direction. The size of cells may also be changed in the circumferential (φ) direction.

It is possible to assemble a graded axisymmetric chiral structure by changing the size of cells in the axial (z), circumferential (φ) or radial (r) direction. The gradated structure can be achieved by changing the length, cross-section or the curvature of struts in one or several directions, as shown in figure 5. The structure's gradient can be altered throughout the structure as a linear or non-linear function of spatial position.

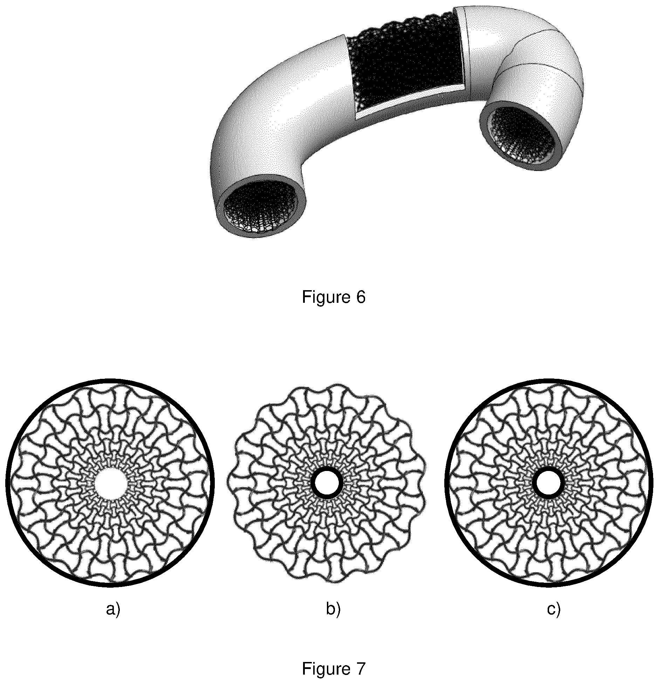

Figure 6 shows the possibility of applying the axisymmetric chiral structure to ensure flow in flexible tubes. The axisymmetric chiral structure may also be used as a tube filler shown in figure 7a, or as a tube wrap with a circular cross-section shown in figure 7b or as filler and a tube wrap with a circular cross-section shown in figure 7c.

## Claims

1. An axisymmetric chiral auxetic structure assembled from a plurality of chiral unit cells, which are uniformly or non-uniformly axisymmetrically distributed in space to form a cylindrical or a spherical shape; **characterised in that** the chiral cells have curved struts (2), which connect in nodes (1), wherein the nodes define a cuboid or a cube and the struts (2) are curved in any function or radius of curvature.

2. The axisymmetric chiral structure, according to claim 1, **characterized in that** the axial symmetry of the auxetic structure is achieved with a periodic distribution of chiral unit cells, i.e. repetition of a pair consisting of one wider and one thinner cell in the radial and circumferential direction in one layer, wherein the chiral unit cells are connected at nodes (1).

3. The axisymmetric chiral structure, according to any of the preceding claims, **characterized in that** a spatially graded chiral structure is achieved by changing the length, cross-section and curvature of chiral unit cell struts or walls throughout the structure.

4. The axisymmetric chiral structure, according to any of the precding claims, **characterized in that** outer surfaces of chiral unit cells are solid, thereby forming closed cells or channels in the structure.

## Patentansprüche

1. Axisymmetrische auxetische chirale Struktur, die aus einer Vielzahl chiraler Elementarzellen zusammengesetzt ist, die gleichmäßig oder ungleichmäßig axisymmetrisch im Raum verteilt sind, um eine zylindrische oder kugelförmige Form zu bilden; **dadurch gekennzeichnet, dass** die chiralen Zellen gekrümmte Stege (2) aufweisen, die in Knoten (1) miteinander verbunden sind, wobei die Knoten einen Quader oder Würfel definieren und die Stege (2) in einer beliebigen Funktion oder mit einem beliebigen Krümmungsradius gekrümmt sind.

2. Axisymmetrische chirale Struktur nach Anspruch 1, **dadurch gekennzeichnet, dass** die axiale Symmetrie der auxetischen Struktur durch eine periodische Verteilung der chiralen Elementarzellen erreicht wird, d.h. durch Wiederholung eines Paares bestehend aus einer breiteren und einer dünneren Zelle in radialer und Umfangsrichtung in einer Schicht, wobei die chiralen Elementarzellen an Knoten (1) verbunden sind.

3. Axisymmetrische chirale Struktur nach einem der vorstehenden Ansprüche, **dadurch gekennzeichnet, dass** eine räumlich abgestufte chirale Struktur durch Ändern der Länge, des Querschnitts und der Krümmung der Stege oder Wände der chiralen Elementarzellen in der gesamten Struktur erreicht wird.

4. Axisymmetrische chirale Struktur nach einem der vorstehenden Ansprüche, **dadurch gekennzeichnet, dass** die Außenflächen der chiralen Elementarzellen fest sind und sich dadurch geschlossene Zellen oder Kanäle in der Struktur bilden.

## Revendications

1. Structure auxétique chirale axisymétrique assemblée à partir d'une pluralité de cellules unitaires chirales qui sont réparties axisymétriquement de façon uniforme ou non uniforme dans l'espace, de façon à former une forme cylindrique ou sphérique ; **caractérisée par le fait que** les cellules chirales ont des entretoises courbes (2) qui se rejoignent en des nœuds (1), lesdits nœuds définissant un cuboïde ou un cube et les entretoises (2) étant incurvées dans toute fonction ou rayon de courbure.

2. Structure chirale axisymétrique, selon la revendication 1, **caractérisée par le fait que** la symétrie axiale de la structure auxétique est obtenue par une répartition périodique des cellules unitaires chirales, c.-à-d. la répétition d'une paire qui consiste en une cellule large et une cellule fine dans les directions radiale et circonférentielle dans une couche, les cellules unitaires chirales se rejoignant aux nœuds (1).

3. Structure chirale axisymétrique selon l'une quelconque des revendications précédentes, **caractérisée par le fait qu'**une structure chirale spatialement échelonnée est obtenue en changeant la longueur, la section transversale et la courbure des entretoises ou parois des cellules unitaires chirales dans toute la structure.

4. Structure chirale axisymétrique selon l'une quelconque des revendications précédentes, **caractérisée par le fait que** les surfaces extérieures des cellules unitaires chirales sont solides, formant ainsi des cellules ou des canaux fermés dans la structure.
